# EUROPEAN PATENT SPECIFICATION

(11) **EP 3 221 817 B1**
(45) Date of publication and mention of the grant of the patent: **18.03.2020**
(21) Application number: 15723226.5
(22) Date of filing: 18.05.2015
(51) Int. Cl.: G06K 9/00, G06K 9/20

(54) **SCREENSHOT BASED INDICATION OF SUPPLEMENTAL INFORMATION**
SCREENSHOTBASIERTE ANZEIGE VON ZUSATZINFORMATIONEN
INDICATION D'INFORMATIONS SUPPLÉMENTAIRES BASÉE SUR UNE CAPTURE D'ÉCRAN

(30) Priority: 18.11.2014 US 201414546169
(43) Date of publication of application: 27.09.2017
(73) Proprietor: Sony Corporation, Tokyo 108-0075 (JP)
(72) Inventor: HANSSON, Emil, S-221 88 Lund (SE); PINHO, Pedro, San Mateo, California 94404 (US); DZUBAN, Daniel, Pleasanton, California 94588 (US)
(74) Representative: Neusser, Sebastian
(86) International application number: PCT/EP2015/060859
(87) International publication number: WO 2016/078779

(56) References cited:
- EP-A2- 2 703 980
- EP-A2- 2 704 061
- EP-A2- 2 741 172
- US-A1- 2011 081 948
- US-A1- 2012 227 074
- US-A1- 2013 297 998
- US-A1- 2013 318 083
- US-A1- 2014 189 576

## Description

### FIELD OF THE INVENTION

The present invention relates to a method of controlling a user device and to a correspondingly configured user device.

### BACKGROUND OF THE INVENTION

In current communication devices, it is possible to provide functionalities on the basis of various kinds of services or applications. A user may decide which service is of interest and install a corresponding application on the device. Examples of such services are social networking services, messaging services, media streaming services, news services, or the like. Such services may be provided by various different entities, and the popularity of such services may change over time.

An example is provided in document US 2013/318083 A1 (HAN BIAO [CN] ET AL) 28 November 2013.

While each of such services may have characteristic features and capabilities, certain enhancements may be desirable from a user perspective. Further, such enhancements could also be desirable from the perspective of other parties. However, the possibilities of modifying an existing popular service to provide such enhancements or even establishing a new service with such enhancements are limited and require dedicated measures for each service.

Accordingly, there is a need for techniques which allow for efficiently enhancing functionalities of a user device.

### SUMMARY OF THE INVENTION

According to an embodiment of the invention, according to claim 1, a method of controlling a user device is provided. According to the method, content is displayed on a display of the user device. A screenshot of the display is captured. On the basis of the screenshot, supplemental information related to the displayed content is obtained. The supplemental information is indicated to a user of the user device.

According to an embodiment, the method may comprise performing image recognition on the captured screenshot. The supplemental information may then be obtained on the basis of at least one object identified by the image recognition.

According to an embodiment, the method may comprise performing text recognition on the captured screenshot. The supplemental information may then be obtained on the basis of at least one object identified by the text recognition.

According to an embodiment, the method may comprise detecting an action of the user. On the basis of the detected action, the capturing of the screenshot and obtaining of the supplemental information may be triggered. The action may for example comprise tapping on the display. Such tapping may be differentiated from other touch actions on the display in terms of its length and/or by a specific tap pattern. For example, the tap may be defined as by a touch on the display which lasts for a certain minimum duration, e.g., of more than 1 s.

According to an embodiment, an area of the display may be identified in the basis of the detected action. For example, the area may be identified on the basis of a position where the above-mentioned tap occurred. The supplemental information may then be obtained further on the basis of the identified area. For example, the above-mentioned image recognition and/or text recognition could focus on the identified area. Further, a search algorithm for obtaining the supplemental information utilises objects identified by the image recognition or text recognition as search keys and prioritize objects in the identified area over objects in other areas of the display.

According to an embodiment, the method may comprise identifying an application generating the displayed content. The supplemental information may then be obtained further on the basis of the identified application. For example, if the identified application is associated with a music streaming service, the image recognition process may be adapted to identify objects as typically displayed while utilizing a music streaming service, such as faces of artists. Further, a search algorithm for obtaining the supplemental information could prioritize search results related to music products, e.g., search results corresponding to information on artists, music genres, or the like.

According to an embodiment, the indicating of the supplemental information may comprise generating an overlay frame on the display. Such overlay frame may show the supplemental information in form of text and/or image elements.

According to an embodiment, the supplemental information may also comprise one or more actions related to an object shown by the displayed content. For example, if the object shown by the displayed content is a commercially available product, the supplemental information may provide a link to a store which allows for purchasing the product. As a further example, if the object shown by the displayed content is an artist, the supplemental information may provide a link to works of this artist.

According to an embodiment, the obtaining of the supplemental information may comprise transmitting a request from the user device to a network based service. Such network service may be independent of a service or application which provides the displayed. For example, such network based service could be provided by a supplier or manufacturer of the user device. The request may for example indicate one or more objects identified by the image recognition and/or text recognition as performed on the user device. Such objects may then be utilized as keys for a search algorithm performed by the network based service. Alternatively or in addition, the request may indicate at least a part of the captured screenshot. In such cases, the image recognition or text recognition may be performed alternatively or additionally by the network based service. In response to the request, the network based service may provide at least a part of the supplemental information to the user device.

According to a further embodiment of the invention, according to claim 7, a user device is provided. The user device comprises a display and at least one processor. The at least one processor is configured to display content on a display of the user device. Further, the at least one processor is configured to capture a screenshot of the display. Further, the at least one processor is configured to obtain, on the basis of the screenshot, supplemental information related to the displayed content. Further, the at least one processor is configured to indicate the supplemental information to a user of the user device.

The at least one processor may be configured to perform steps of the method according to the above embodiments.

For example, the at least one processor may be configured to perform image recognition on the captured screenshot and obtain the supplemental information on the basis of at least one object identified by the image recognition.

Further, the at least one processor may be configured to perform text recognition on the captured screenshot and obtain the supplemental information on the basis of at least one object identified by the text recognition.

Further, the at least one processor may be configured to detect an action of the user and, on the basis of the detected action, trigger said capturing of the screenshot and obtaining of the supplemental information. This action may comprise tapping on the display.

Further, the at least one processor may be configured to identify, on the basis of the detected action, an area of the display and obtain the supplemental information on the basis of the identified area.

Further, the at least one processor may be configured to identify an application providing the displayed content and obtain the supplemental information on the basis of the identified application.

Further, the at least one processor may be configured to indicate the supplemental information by generating an overlay frame on the display.

Further, the supplemental information may comprise one or more actions related to an object shown in the displayed content.

Further, the user device may comprise an interface to a network based service, and the at least one processor may configured to obtain at least a part of the supplemental information by transmitting a request from the user device to the network based service.

In some embodiments, the above-described method may also be implemented by a system including the user device and a network device. In such system, the network device may provide a network-based service for performing at least a part of the image recognition and/or text recognition or for determining the supplemental information by the search algorithm.

The above and further embodiments of the invention will now be described in more detail with reference to the accompanying drawings.

### BRIEF DESCRIPTION OF THE DRAWINGS

Fig. 1 schematically illustrates a scenario of operating a user device according to an embodiment of the invention.
Fig. 2 schematically illustrates a scenario in which supplemental information is indicated according to an embodiment of the invention.
Fig. 3 shows a flowchart for illustrating a method for indicating supplemental information according to an embodiment of the invention.
Fig. 4 shows a flowchart for illustrating a method which may be utilized in an embodiment of the invention for providing at least a part of the supplemental information to the user device.
Fig. 5 schematically illustrates a processor-based implementation of a user device according to an embodiment of the invention.

### DETAILED DESCRIPTION OF EMBODIMENTS

In the following, exemplary embodiments of the invention will be described in more detail. It has to be understood that the following description is given only for the purpose of illustrating the principles of the invention and is not to be taken in a limiting sense. Rather, the scope of the invention is defined only by the appended claims and is not intended to be limited by the exemplary embodiments described hereinafter.

The illustrated embodiments relate to indicating supplemental information to a user of a user device. The user device may for example be a mobile communication device, such as a smartphone or a tablet computer. However, it is to be understood that the illustrated concepts may also be applied in other kinds of user devices, such as personal computers, gaming devices, media player devices, or the like.

In some implementations, the user device may be provided with network connectivity so as to allow utilization of one or more services provided via a communication network. Such services may for example include social networking services, media streaming services, messaging services, news services, or the like. The network connectivity may be wireless, e.g., based on one or more radio technologies, and/or wire-based. Examples of radio technologies which may be supported by the user device include cellular radio technologies, such as GSM (Global System for Mobile Communications), UMTS (Universal Mobile Telecommunication System), LTE (Long Term Evolution), or CDMA2000. Alternatively or in addition, the radio connectivity may be based on a WLAN (Wireless Local Area Network) technology according to an IEEE 802.11 standard or on a WPAN (Wireless Personal Area Network) technology, such as Bluetooth.

In the illustrated concepts, a screenshot captured from a display of the user device is utilized as a basis for providing supplemental information related to currently displayed content. The supplemental information may enhance the user experience by providing information which is typically not shown by an application which provides the displayed content. Further, the supplemental information may offer additional possibilities of interaction to the user, e.g., purchase options or links. By utilizing the screenshot, no specific modifications in the application providing the displayed content are required. Rather, the functionalities for providing the supplemental information may be provided independently of such application, e.g., by a separate application or as part of an operating system of the user device.

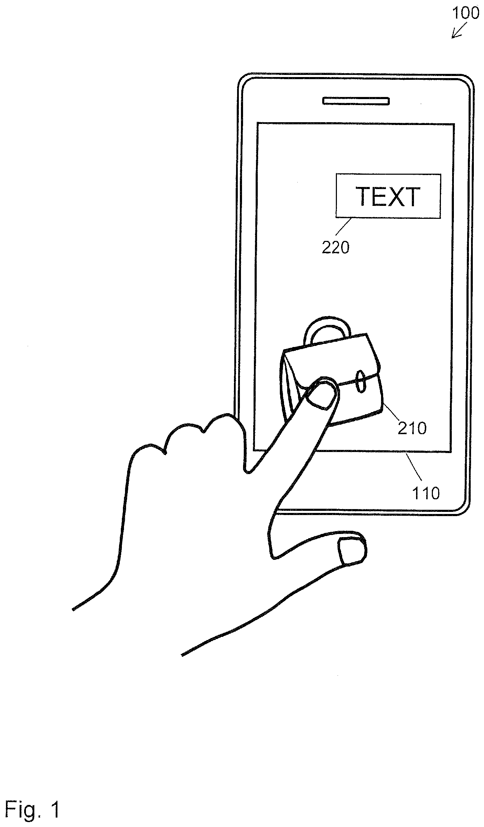

Fig. 1 schematically illustrates an exemplary scenario of utilizing a user device 100. In the example of Fig. 1, the user device 100 is assumed to be a smartphone. As illustrated, the user device 100 is provided with a display 110. The display may for example be a touch display, which at the same time allows for detecting inputs of the user, e.g., by capacitive sensing. The display 110 is utilized for displaying various types of content to a user of the user device 100. For example such content may be provided by a service or application running on the user device 100. Such services or applications may for example include social networking services/applications, media streaming services/applications, messaging services/applications, news services/applications, or the like. As illustrated, the displayed content may include one or more picture elements 210 and/or one or more text elements 220. Such picture elements 210 or text elements 220 may be part of a user interface of the service/application running on the user device 100.

As shown in Fig. 1, the functionality of providing the supplemental information may be triggered by an action of the user, in particular tapping on the display 110. To distinguish this tapping from other touch operations defined for a user interface of the user device 100 or for the application providing the displayed content, the tapping may correspond to a "long tap", i.e., touching of the display for longer than a certain minimum duration, e.g., of 1s. The long tap is detected and triggers the functionality of providing the supplemental information. Further, also a location of the long tap on the display may be detected. In the illustrated example, the long tap is in the area of the image object 210.

Detection of the long tap triggers capturing of a screenshot. This screenshot may cover the entire area of the display 110 or only a part thereof, e.g., that part of the display 110 which is utilized by the application which generates the content shown on the display 110, i.e., the image object 210 and the text object 220. Such part of the display 110 may for example correspond to a window or an application user interface.

As a next step, image recognition and/or text recognition may be performed on captured screenshot to identify objects in the displayed content. In the illustrated example, such image recognition and text recognition would for example identify the image object as showing a bag and the text object 220 with the included text. The recognition process may also provide further characteristics of the identified objects, e.g., a brand, supplier or model type of the bag. Similarly, the identified text may be further interpreted by identifying words, names, or phrases. The image recognition and/or text recognition process may also focus on an area in which the long tap was detected. For example, areas of the screenshot which are located further away from the location of the long tap than a certain threshold distance may be disregarded in the image recognition or text recognition. As a further possibility, text recognition may be performed on the complete screenshot, whereas image recognition may be performed only in the vicinity of the location of the long tap. Still further, in the vicinity of the location of the long tap a higher resolution of image recognition or text recognition could be utilized than in other areas of the screenshot. This may for example also allow for identifying small text elements within the recognized image object 210, which may allow for a more precise categorization of the image object 210. The image recognition or text recognition may also be performed depending on a type the application providing the displayed content. For example, if the application is known to provide content in the form of only text, the image recognition may be deactivated.

The identified objects 210, 220 are then utilized as keys for a search algorithm. As further parameter, such search algorithm may also utilize the type of the application providing the displayed content. For example, if the application is a music streaming application, the search algorithm may prioritize search results related to music. Similarly, if the application is a video streaming application, the search algorithm may prioritize search results related to video, television, or cinema.

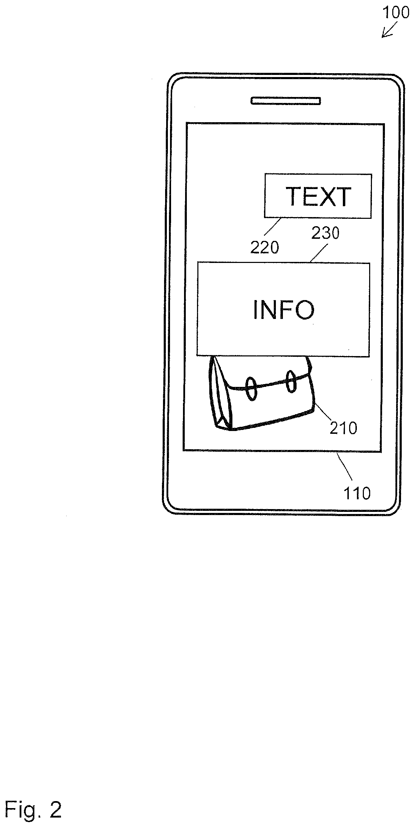

Having determined the supplemental information from the search results, it is indicated to the user. As illustrated by Fig. 2, this may be accomplished by providing an overlay frame 230 on the display 110. The supplemental information shown on the overlay frame may include various information items which are typically not shown by the application providing the content shown on the screen. In the illustrated example, the bag of the image object 230 may for example be part of image content shown by a media streaming application, a social networking application, or a news application. However, the shown content may primarily focus on other elements, e.g., a person carrying the bag. If desired, the indicated supplemental information may offer the user the possibility to learn more about the bag, e.g., its manufacturer, its model type, or from where it is commercially available.

The supplemental information shown by the overlay frame 230 may also offer interaction possibilities to the user. For example, the supplemental information may include links related to the identified object. Such links may offer even further information or actions related to the identified object. For example, in the illustrated example such action may correspond to purchasing the bag of the image object 230 from an online store or adding the bag to a wishlist. Further, such action could correspond to sharing information on the bag with another person, e.g., a contact from a social networking service.

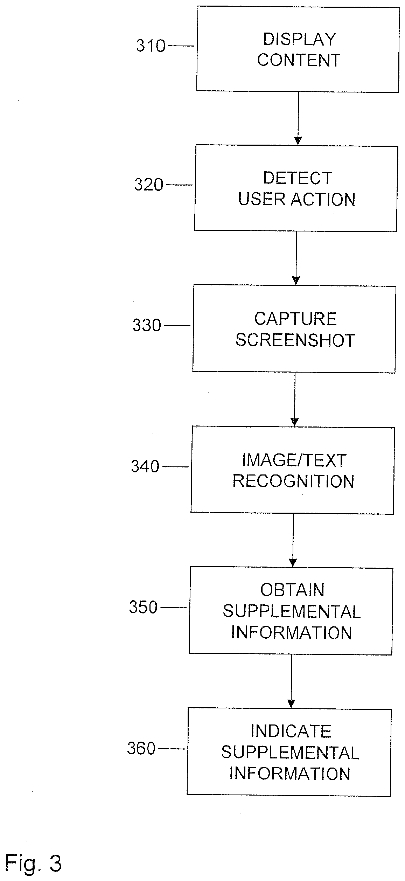

Fig. 3 shows a flowchart which illustrates a method which may be used for indicating supplemental information on a user device. The method may for example be implemented in connection with the above-mentioned user device 100. If a processor based implementation of the user device is utilized, at least a part of the steps of the method may be performed and/or controlled by one or more processors of the user device.

At step 310, content is shown on the display of the user device. The display may for example be a touch sensitive display configured to detect various kinds of touch actions by the user. The displayed content may be provided by a certain application currently utilized by a user of the user device. The application may for example be associated with a network based service, such as a social networking service, a media streaming service, a messaging service, or a news service. The displayed content may include one or more image elements and/or one or more text elements. The complete display or only a part of the display may be utilized for displaying the content.

At step 320, an action by the user may be detected. Such action may for example correspond to or include tapping on the display of the user device. The tapping action may be distinguishable from other tapping actions by a defining a tapping length and/or tapping pattern and comparing the characteristics of the detected tapping action to this tapping length or tapping pattern. The detected action may also allow for identifying a certain area of the display. For example, an area in the vicinity of a location where the tapping was performed may be identified. Such area may for example be defined in terms of a certain distance from the location of tapping, e.g., as a frame delimited by lines in a certain horizontal and vertical distance from the location of tapping, or as a circle delimited by a line in a certain distance around the location of tapping.

At step 330, a screenshot is captured. This may be triggered by the action detected at step 330. The captured screenshot may cover the complete display of the user device or only a part of the display, e.g., that part which is allocated to the currently utilized application for displaying the content. In some scenarios, the application providing the content may be identified, e.g., in response to detecting the action of step 330 or at some other instance, and the category or specific type of the identified application may be utilized as a basis for determining the part of the display covered by the screenshot. Identifying the application may also involve querying a database, e.g., as provided by a network based application store. Identifying the application may also include identifying a category of the application. Possible categories are for example music, video, messaging, social networking, photo, news, maps, shopping, or the like. In some cases, the application may also be identified in terms of its name, its provider, and/or its version number.

At step 340, image recognition and/or text recognition may be performed on the screenshot captured at step 330. The image recognition or text recognition may be performed over the complete screenshot or may focus on certain areas of the screenshot. For example, such areas may be defined depending on the area identified based on the action of the user at step 320, e.g., depending on the location of tapping. Further, such area may be defined depending on the application providing the displayed content. For example, certain applications may be known to utilize specific parts of the display for showing image elements and/or to utilize specific parts of the display for showing text elements. Such knowledge may be applied for setting a focus of the image recognition and/or text recognition accordingly. The area identified on the basis of the action of the user may in turn be interpreted as an indication that any objects identified in this area are of specific interest to the user. As a result of the image recognition and/or text recognition, one or more identified objects may be provided. Such identified objects may correspond to articles, such as commercial products, to persons, such as artists, celebrities or other well-known people, social contacts of the user, to landmarks, to cover arts of media products (music, videos, books), to brands, or the like.

The image recognition and/or text recognition may be performed in the user device. Further, at least a part of the image recognition and/or text recognition may be performed by a network based service. In the latter case, the screenshot or a part thereof may be transmitted from the user device to the network based service, and the network based service may return the identified object(s). In such cases, performing the image recognition and/or text recognition may involve sending one or more requests to a network based service.

At step 350, supplemental information is obtained on the basis of the screenshot. This is accomplished on the basis of a search algorithm which utilizes the identified object(s) from step 340 as a key. The search algorithm may be implemented in the user device and/or utilize one or more network based services. In such cases, obtaining the supplemental information may involve sending one or more requests to a network based service. In some implementations, the image recognition or text recognition may also be combined with the search algorithm. In such cases, the screenshot or parts of the screenshot may be utilized as a key for the search algorithm.

In some scenarios, the search algorithm may be adapted depending on the area identified based on the detected action of the user. For example, if an object is identified in the corresponding area of the screenshot, search results obtained by utilizing this object as a key are prioritized over other search results, e.g., obtained using objects identified in other areas of the screenshot.

Alternatively or in addition, the algorithm may be adapted depending on the application providing the displayed content. For example, if the application is associated with a music streaming service, search results relating to music products or music artists may be prioritized over other search results.

The supplemental information may then be determined from the search results provided by the search algorithm.

At step 360, the supplemental information is indicated to the user. This may be accomplished by generating an overlay frame on the display, e.g., as illustrated by Fig. 2. The overlay frame may be displayed on top of the content shown by the currently utilized application. In some scenarios, a location at which the overlay frame is generated on the display be depend on the area identified on the basis of the detected action of the user, e.g., on the location of tapping. In addition or alternatively, the location at which the overlay frame is generated on the display may depend on an identified object to which the supplemental information relates. For example, in the exemplary scenario of Fig. 2, the overlay frame 230 may indicate supplemental information related to the bag of the image object 210, and the overlay frame may thus be generated at a location close to the image object 210 representing the bag.

The supplemental information may include various kinds of information, in particular information which is typically not shown by the application providing the generated content. For example, in the scenario of Fig. 2, the bag of the image object 210 may be shown in video content provided by a video streaming application. The supplemental information may then indicate a brand of the bag, a manufacturer of the bag, a model name of the bag, specifications of the bag, and/or one or more stores where the bag can be purchased, information which typically would not be shown by the application providing the displayed content. In some scenarios, the supplemental information may also indicate actions related to an object identified in the displayed content, e.g., one or more links for obtaining still further information, one or more links for purchasing a product (e.g., the product corresponding to the identified object or an alternative product), one or more links for playing a media item, one or more links for adding a product to a wish list, or the like.

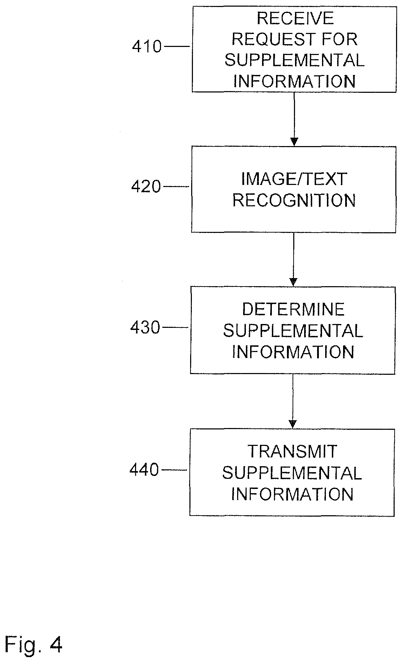

Fig. 4 shows a flowchart which illustrates a method which may be used by a network based service for providing the supplemental information to the user device. At least a part of the steps of the method may be performed and/or controlled by one or more processors of a network device, e.g., a server having network connectivity to the user device.

At step 410, a request for supplemental information is received from the user device. The request may indicate one or more objects to be used as search keys by a search algorithm. Further, the request may include at least a part of a screenshot captured from a display of the user device.

If the request of step 410 included a screenshot or a part of a screenshot, image recognition and/or text recognition may be performed thereon at step 420. As a result of the image recognition and/or text recognition, one or more identified objects may be provided. Such identified objects may correspond to articles, such as commercial products, to persons, such as artists, celebrities or other well-known people, social contacts of the user, to landmarks, to cover arts of media products (music, videos, books), to brands, or the like. The image recognition and/or text recognition may also be adapted depending on parameters indicated in the request of step 410. For example, such parameters may indicate one or more areas of the screenshot on which the image recognition and/or text recognition should focus.

At step 430, supplemental information is determined. This may be accomplished on the basis of the object(s) indicated in the request of step 410 and/or on the object(s) identified at step 420. For this purpose, a search algorithm may be applied which utilizes the identified object(s) as a key. The search algorithm may also be adapted depending on parameters indicated in the request of step 410. For example, such parameters may indicate one or more category of search results to be prioritized. The supplemental information may then be determined from search results provided by the search algorithm.

At step 440, the determined supplemental information is transmitted to the user device, e.g., in a response to the request of step 410.

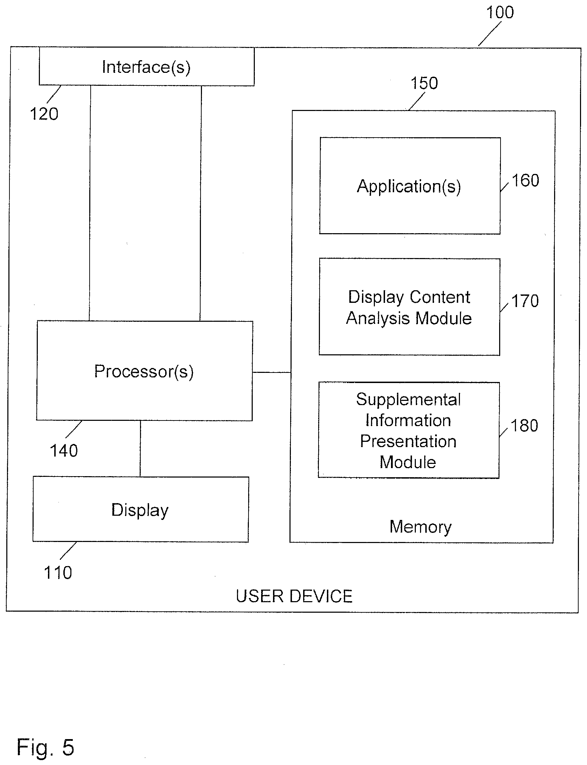

Fig. 5 schematically illustrates exemplary structures for implementing a user device, such as the user device 100.

As illustrated, the user device 100 includes the display 110, one or more processors 140, and a memory 150. The display 110, the interface(s) 120, and the memory 150 and the interface(s) 120 are coupled to the processor(s) 140, e.g., using one or more internal bus systems of the user device 100. Further, the device may include one or more interfaces 120, e.g., one or more radio interfaces and/or one or more wire-based interfaces, for providing network connectivity of the user device 100.

The memory 150 includes program code modules 160, 170, 180 with program code to be executed by the processor(s) 140. In the illustrated example, these program code modules include one or more applications 160, a display content analysis module 170, and a supplemental information presentation module 180.

The application(s) 160 which may provide content to be displayed on the display 110, e.g., as explained in connection with step 310 of Fig. 3. The display content analysis module 170 may capture a screenshot and obtain supplemental information on the basis of the screenshot, e.g., as explained in connection with steps 320 to 350 of Fig. 3. The supplemental information presentation module 180 may indicate the supplemental information to a user of the user device 100, e.g., a explained in connection with step 360 of Fig. 3.

It is to be understood that the structures as illustrated in Fig. 5 are merely exemplary and that the user device 100 may also include other elements which have not been illustrated, e.g., structures or program code modules for implementing known functionalities of a user device 100, e.g., communication functionalities, media handling functionalities, or the like.

As can be seen, the concepts as explained above allow for efficiently providing supplemental information to a user. Specifically, supplemental information relating to content displayed by a certain application may be provided without requiring modifications in the application or a service associated with the application.

It is to be understood that the concepts as explained above are susceptible to various modifications. For example, the concepts could be applied in various kinds of devices, in connection with various kinds of services/applications, and in connection with various types of network technologies. Further, it is to be understood that various kinds of user actions may be defined for triggering the providing of the supplemental information. Further, various ways of indicating the supplemental information may be utilized in addition or as an alternative to the overlay frame, e.g., indicating the supplemental information by a sound message.

## Claims

1. A method of controlling a mobile communication device (100), the method comprising:
- displaying content (210, 220) on a display (110) of the mobile communication device (100);
- detecting a touch action of the user;
- on the basis of the detected touch action, triggering capturing a screenshot of the display (110);
- identifying an application and its category providing the displayed content (210, 220);
- on the basis of the screenshot and the category of the identified application, obtaining supplemental information (230) related to the displayed content (210, 220), wherein obtaining the supplemental information (230)
comprises
- performing image recognition on the captured screenshot; and
- obtaining the supplemental information (230) on the basis of a search algorithm which utilizes at least one object (210) identified by the image recognition as a key, wherein the supplemental information (230) is determined from search results provided by the search algorithm, wherein those search results relating to the category of the identified application are prioritized over other search results; and
- indicating the supplemental information (230) to a user of the mobile communication device (100).

2. The method according to claim 1, comprising:
- performing text recognition on the captured screenshot; and
- obtaining the supplemental information (230) on the basis of at least one object (220) identified by the text recognition.

3. The method according to claim 1 or claim 2, comprising:
- on the basis of the detected touch action, identifying an area of the display (110); and
- obtaining the supplemental information (230) on the basis of the identified area.

4. The method according to any one of claims 1-3,
wherein said indicating of the supplemental information comprises generating an overlay frame (230) on the display (110).

5. The method according to any one of claims 1-4,
wherein the supplemental information (230) comprises one or more actions related to an object shown by the displayed content (210, 220).

6. The method according to any one of claims 1-5,
wherein said obtaining of the supplemental information (230) comprises transmitting a request from the mobile communication device (100) to a network based service.

7. A mobile communication device (100), comprising:
a display (110); and
at least one processor (140), the at least one processor (140) being configured to:
- display content (210, 220) on the display (110) of the mobile communication device (100);
- detect a touch action of the user;
- on the basis of the detected touch action, trigger capturing a screenshot of the display (110);
- identify an application and its category providing the displayed content (210, 220);
- on the basis of the screenshot and the category of the identified application, obtain supplemental information (230) related to the displayed content (210, 220), wherein obtaining the supplemental information (230) comprises to
- perform image recognition on the captured screenshot; and
- obtain the supplemental information (230) on the basis of a search algorithm which utilizes at least one object (210) identified by the image recognition as a key, wherein the supplemental information (230) is determined from search results provided by the search algorithm, wherein those search results relating to the category of the identified application are prioritized over other search results; and
- indicate the supplemental information (230) to the user.

8. The mobile communication device (100) according to claim 7,
wherein the at least one processor (140) is configured to:
- perform image recognition on the captured screenshot; and
- obtain the supplemental information (230) on the basis of at least one object (210) identified by the image recognition.

9. The mobile communication device (100) according to claim 7 or claim 8,
wherein the at least one processor (140) is configured to:
- perform text recognition on the captured screenshot; and
- obtain the supplemental information (230) on the basis of at least one object (220) identified by the text recognition.

10. The mobile communication device (100) according to any one of claims 7 to 9,
wherein said touch action comprises tapping on the display (110).

11. The mobile communication device (100) according to any one of claims 7 to 10,
wherein the at least one processor (140) is configured to:
- on the basis of the detected touch action, identify an area of the display (110); and
- obtain the supplemental information (230) on the basis of the identified area.

12. The mobile communication device (100) according to any one of claims 7-11,
wherein the at least one processor is configured to indicate the supplemental information by generating an overlay frame on the display.

13. The mobile communication device (100) according to any one of claims 7-12,
wherein the supplemental information (230) comprises one or more actions related to an object shown in the displayed content (210, 220).

14. The mobile communication device (100) according to any one of claims 7-13, comprising:
an interface (120) to a network based service;
wherein the at least one processor (140) is configured to obtain at least a part of the supplemental information (230) by transmitting a request from the mobile communication device (100) to the network based service.

## Patentansprüche

1. Verfahren zum Steuern einer mobilen Kommunikationsvorrichtung (100), wobei das Verfahren umfasst:
- Anzeigen von Inhalten (210, 220) auf einer Anzeige (110) der mobilen Kommunikationsvorrichtung (100);
- Erfassen eines Berührvorganges des Benutzers;
- auf dem erfassten Berührvorgang beruhendes Auslösen einer Aufnahme eines Bildschirmabbilds der Anzeige (110);
- Ermitteln einer Anwendung und ihrer Kategorie, die den angezeigten Inhalt bereitstellt (210, 220);
- auf dem Bildschirmabbild und der Kategorie der ermittelten Anwendung beruhendes Beziehen von Zusatzinformation (230) im Zusammenhang mit dem angezeigten Inhalt (210, 220), wobei ein Beziehen der Zusatzinformation (230) umfasst
- Durchführen einer Bilderkennung auf dem aufgenommenen Bildschirmabbild; und
- Beziehen der Zusatzinformation (230) beruhend auf einem Suchalgorithmus, der zumindest ein durch die Bilderkennung ermitteltes Objekt (210) als einen Schlüssel verwendet, wobei die Zusatzinformation (230) aus von dem Suchalgorithmus bereitgestellten Suchergebnissen bestimmt wird, wobei jene Suchergebnisse, die sich auf die Kategorie der ermittelten Anwendung beziehen, gegenüber anderen Suchergebnissen priorisiert werden; und
- Mitteilen der Zusatzinformation (230) an einen Benutzer der mobilen Kommunikationsvorrichtung (100).

2. Verfahren nach Anspruch 1, umfassend:
- Durchführen einer Texterkennung auf dem aufgenommenen Bildschirmabbild; und
- Beziehen der Zusatzinformation (230) beruhend auf zumindest einem durch die Texterkennung ermittelten Objekt (220).

3. Verfahren nach Anspruch 1 oder Anspruch 2, umfassend:
- auf dem erfassten Berührvorgang beruhendes Ermitteln eines Bereichs der Anzeige (110); und
- Beziehen der Zusatzinformation (230) beruhend auf dem ermittelten Bereich.

4. Verfahren nach einem jeden der Ansprüche 1-3,
wobei das Mitteilen der Zusatzinformation ein Erzeugen eines Überlagerungsrahmens (230) auf der Anzeige (110) umfasst.

5. Verfahren nach einem jeden der Ansprüche 1-4,
wobei die Zusatzinformation (230) einen oder mehrere Vorgänge im Zusammenhang mit einem durch den angezeigten Inhalt (210, 220) gezeigtes Objekt umfasst.

6. Verfahren nach einem jeden der Ansprüche 1-5,
wobei das Beziehen der Zusatzinformation (230) ein Übertragen einer Anforderung von der mobilen Kommunikationsvorrichtung (100) an einen netzbasierten Dienst umfasst.

7. Mobile Kommunikationsvorrichtung (100), umfassend:
eine Anzeige (110); und
zumindest einen Prozessor (140), wobei der zumindest eine Prozessor (140) eingerichtet ist zum:
- Anzeigen von Inhalten (210, 220) auf der Anzeige (110) der mobilen Kommunikationsvorrichtung (100);
- Erfassen eines Berührvorganges des Benutzers;
- auf dem erfassten Berührvorgang beruhenden Auslösen einer Aufnahme eines Bildschirmabbilds der Anzeige (110);
- Ermitteln einer Anwendung und ihrer Kategorie, die den angezeigten Inhalt bereitstellt (210, 220);
- auf dem Bildschirmabbild und der Kategorie der ermittelten Anwendung beruhendes Beziehen von Zusatzinformation (230) im Zusammenhang mit dem angezeigten Inhalt (210, 220), wobei ein Beziehen der Zusatzinformation (230) umfasst
- Durchführen einer Bilderkennung auf dem aufgenommenen Bildschirmabbild; und
- Beziehen der Zusatzinformation (230) beruhend auf einem Suchalgorithmus, der zumindest ein durch die Bilderkennung ermitteltes Objekt (210) als einen Schlüssel verwendet, wobei die Zusatzinformation (230) aus von dem Suchalgorithmus bereitgestellten Suchergebnissen bestimmt wird, wobei jene Suchergebnisse, die sich auf die Kategorie der ermittelten Anwendung beziehen, gegenüber anderen Suchergebnissen priorisiert werden; und
- Mitteilen der Zusatzinformation (230) an den Benutzer der mobilen Kommunikationsvorrichtung (100).

8. Mobile Kommunikationsvorrichtung (100) nach Anspruch 7,
wobei der zumindest eine Prozessor (140) eingerichtet ist zum:
- Durchführen einer Bilderkennung auf dem aufgenommenen Bildschirmabbild; und
- Beziehen der Zusatzinformation (230) beruhend auf zumindest einem durch die Bilderkennung ermittelten Objekt (210).

9. Mobile Kommunikationsvorrichtung (100) nach Anspruch 7 oder Anspruch 8,
wobei der zumindest eine Prozessor (140) eingerichtet ist zum:
- Durchführen einer Texterkennung auf dem aufgenommenen Bildschirmabbild; und
- Beziehen der Zusatzinformation (230) beruhend auf zumindest einem durch die Texterkennung ermittelten Objekt (220).

10. Mobile Kommunikationsvorrichtung (100) nach einem jeden der Ansprüche 7 bis 9,
wobei der Berührvorgang ein Antippen der Anzeige (110) umfasst.

11. Mobile Kommunikationsvorrichtung (100) nach einem jeden der Ansprüche 7 bis 10,
wobei der zumindest eine Prozessor (140) eingerichtet ist zum:
- auf dem erfassten Berührvorgang beruhendes Ermitteln eines Bereichs der Anzeige (110); und
- Beziehen der Zusatzinformation (230) beruhend auf dem ermittelten Bereich.

12. Mobile Kommunikationsvorrichtung (100) nach einem jeden der Ansprüche 7-11,
wobei der zumindest eine Prozessor eingerichtet ist zum Mitteilen der Zusatzinformation durch Erzeugen eines Überlagerungsrahmens auf der Anzeige.

13. Mobile Kommunikationsvorrichtung (100) nach einem jeden der Ansprüche 7-12,
wobei die Zusatzinformation (230) einen oder mehrere Vorgänge im Zusammenhang mit einem durch den angezeigten Inhalt (210, 220) gezeigtes Objekt umfasst.

14. Mobile Kommunikationsvorrichtung (100) nach einem jeden der Ansprüche 7-13, umfassend:
eine Schnittstelle (120) zu einem netzbasierten Dienst;
wobei der zumindest eine Prozessor (140) eingerichtet ist zum Beziehen zumindest eines Teils der Zusatzinformation (230) durch ein Übertragen einer Anforderung von der mobilen Kommunikationsvorrichtung (100) an den netzbasierten Dienst.

## Revendications

1. Procédé de commande d'un dispositif de communication mobile (100), le procédé comprenant les étapes consistant à :
- afficher un contenu (210, 220) sur un afficheur (110) du dispositif de communication mobile (100) ;
- détecter une action tactile de l'utilisateur ;
- sur la base de l'action tactile détectée, déclencher la capture d'une capture d'écran de l'afficheur (110) ;
- identifier une application et sa catégorie fournissant le contenu affiché (210, 220) ;
- sur la base de la capture d'écran et de la catégorie de l'application identifiée, obtenir des informations supplémentaires (230) liées au contenu affiché (210, 220), où l'obtention des informations supplémentaires (230) comprend
- la réalisation d'une reconnaissance d'image sur la capture d'écran capturée ; et
- l'obtention des informations supplémentaires (230) sur la base d'un algorithme de recherche qui utilise au moins un objet (210) identifié par la reconnaissance d'image comme clé, où les informations supplémentaires (230) sont déterminées à partir de résultats de recherche fournis par l'algorithme de recherche, où ces résultats de recherche relatifs à la catégorie de l'application identifiée sont priorisés par rapport à d'autres résultats de recherche ; et
- indiquer les informations supplémentaires (230) à un utilisateur du dispositif de communication mobile (100).

2. Procédé selon la revendication 1, comprenant les étapes consistant à :
- réaliser une reconnaissance de texte sur la capture d'écran capturée ; et
- obtenir les informations supplémentaires (230) sur la base d'au moins un objet (220) identifié par la reconnaissance de texte.

3. Procédé selon la revendication 1 ou la revendication 2, comprenant les étapes consistant à :
- sur la base de l'action tactile détectée, identifier une zone de l'afficheur (110) ; et
- obtenir les informations supplémentaires (230) sur la base de la zone identifiée.

4. Procédé selon l'une quelconque des revendications 1 à 3,
dans lequel ladite indication des informations supplémentaires comprend la génération d'un cadre de superposition (230) sur l'afficheur (110).

5. Procédé selon l'une quelconque des revendications 1 à 4,
dans lequel les informations supplémentaires (230) comprennent une ou plusieurs actions liées à un objet représenté par le contenu affiché (210, 220).

6. Procédé selon l'une quelconque des revendications 1 à 5,
dans lequel ladite obtention des informations supplémentaires (230) comprend la transmission d'une demande du dispositif de communication mobile (100) à un service basé sur le réseau.

7. Dispositif de communication mobile (100), comprenant :
un afficheur (110) ; et
au moins un processeur (140), l'au moins un processeur (140) étant configuré pour :
- afficher un contenu (210, 220) sur l'afficheur (110) du dispositif de communication mobile (100) ;
- détecter une action tactile de l'utilisateur ;
- sur la base de l'action tactile détectée, déclencher la capture d'une capture d'écran de l'afficheur (110) ;
- identifier une application et sa catégorie fournissant le contenu affiché (210, 220) ;
- sur la base de la capture d'écran et de la catégorie de l'application identifiée, obtenir des informations supplémentaires (230) liées au contenu affiché (210, 220), où l'obtention des informations supplémentaires (230) comprend le fait de
- réaliser une reconnaissance d'image sur la capture d'écran capturée ; et
- obtenir les informations supplémentaires (230) sur la base d'un algorithme de recherche qui utilise au moins un objet (210) identifié par la reconnaissance d'image comme clé, où les informations supplémentaires (230) sont déterminées à partir de résultats de recherche fournis par l'algorithme de recherche, où ces résultats de recherche relatifs à la catégorie de l'application identifiée sont priorisés par rapport à d'autres résultats de recherche ; et
- indiquer les informations supplémentaires (230) à l'utilisateur.

8. Dispositif de communication mobile (100) selon la revendication 7,
dans lequel l'au moins un processeur (140) est configuré pour :
- réaliser une reconnaissance d'image sur la capture d'écran capturée ; et
- obtenir les informations supplémentaires (230) sur la base d'au moins un objet (210) identifié par la reconnaissance d'image.

9. Dispositif de communication mobile (100) selon la revendication 7 ou la revendication 8,
dans lequel l'au moins un processeur (140) est configuré pour :
- réaliser une reconnaissance de texte sur la capture d'écran capturée ; et
- obtenir les informations supplémentaires (230) sur la base d'au moins un objet (210) identifié par la reconnaissance de texte.

10. Dispositif de communication mobile (100) selon l'une quelconque des revendications 7 à 9,
dans lequel ladite action tactile comprend le tapotement sur l'afficheur (110).

11. Dispositif de communication mobile (100) selon l'une quelconque des revendications 7 à 10,
dans lequel l'au moins un processeur (140) est configuré pour :
- sur la base de l'action tactile détectée, identifier une zone de l'afficheur (110) ; et
- obtenir les informations supplémentaires (230) sur la base de la zone identifiée.

12. Dispositif de communication mobile (100) selon l'une quelconque des revendications 7 à 11,
dans lequel l'au moins un processeur est configuré pour indiquer les informations supplémentaires en générant un cadre de superposition sur l'afficheur.

13. Dispositif de communication mobile (100) selon l'une quelconque des revendications 7 à 12,
dans lequel les informations supplémentaires (230) comprennent une ou plusieurs actions liées à un objet représenté dans le contenu affiché (210, 220).

14. Dispositif de communication mobile (100) selon l'une quelconque des revendications 7 à 13, comprenant :
une interface (120) à un service basé sur le réseau ;
dans lequel l'au moins un processeur (140) est configuré pour obtenir au moins une partie des informations supplémentaires (230) en transmettant une demande du dispositif de communication mobile (100) au service basé sur le réseau.
